# EUROPÄISCHE PATENTANMELDUNG

(11) **EP 1 855 232 A1**
(43) Veröffentlichungstag der Anmeldung: **14.11.2007**
(21) Anmeldenummer: 06113605.7
(22) Anmeldetag: 08.05.2006
(51) Int. Cl.: G06Q 10/00, H02G 3/00

(54) **Verfahren zur dauerhaften Identifizierung und Dokumentation von Kabel- und Rohrdurchführungen in Gebäuden**

(71) Anmelder: DocuPort AG, 50769 Köln (DE)
(72) Erfinder: Streetz, Georg Martin, 51061 Köln (DE); Zimmermann, Karl, 51061 Köln (DE); Zimmermann, Marc Rudolf, 51061 Köln (DE)
(74) Vertreter: Huhn, Michael

(57) **Zusammenfassung**

Die Erfindung bezieht sich auf ein Verfahren zur Identifizierung einer Durchführung (10, 62) für mindestens eine Leitung (64) für ein Versorgungsmedium durch ein Gebäudeteil (60), insbesondere eine Wand oder eine Decke sowie auf einen Kennzeichnungsträger (66). Nach Vergabe einer Kennzeichnungsnummer und deren Aufbringen auf den Kennzeichnungsträger (66) ist die Kennzeichnungsnummer einer Durchführung (62) eindeutig zugeordnet. Auf dem Kennzeichnungsträger (66) sind technische Daten und organisatorische Daten in codierter Form gespeichert. Nach dem Verbau (206) des Kennzeichnungsträgers (66) in einer Durchführung (10, 62) ist mindestens ein Endbereich (70, 78), bevorzugt beide Bereiche (70, 78) an der Durchführung (62) sichtbar. Es erfolgt eine Einpflege (18) mindestens eines, mindestens die Kennzeichnungsnummer enthaltenden, aktualisierbaren Datensatzes (110ᵢ, 120ᵢ, 130ᵢ, 140ᵢ, 150ᵢ, 160ᵢ, 170ᵢ, 180ᵢ, 190ᵢ) in ein Dokumentationssystem (100).

## Beschreibung

### Stand der Technik

Der Brandschutz von Gebäuden umfasst unter anderem auch vorbeugende bauliche Maßnahmen. Neben Brandabschnitten und Rettungswegen, Brandmelde- und Löschanlagen gehören hierzu auch Abschottungen von Kabel- und Rohrdurchführungen in Wänden und Decken. Diese Durchführungen müssen, um eine bestimmte Feuerwiderstandsdauer zu erreichen, mit geeigneten Bauteilen wieder verschlossen werden, um einen Feuer- und auch Rauchübertritt sowie eine unzulässige Wärmeweiterleitung auf die feuerabgewandte Seite zu verhindern.

Gerade in komplexen Gebäuden werden immer wieder bestehende Durchführungen geöffnet und neue Durchführungen geschaffen, um nachträglich Rohre oder Leitungen durch ein Bauteil, wie z. B. eine Wand oder eine Decke, hindurchzuführen. Dies führt zu einer Vielzahl von Durchführungen in einem Gebäudekomplex, wobei die Lage der Durchführungen, deren Anzahl und deren Zustand zum großen Teil für einen Betreiber oder Eigentümer eines Gebäudes unbekannt sind. Somit stellt dies aus der Sicht des Brandschutzes ein hohes Sicherheitsrisiko dar, da zwar das ausführende Unternehmen, welches zusätzliche Durchbrüche in Wand oder Decke schafft, über die Lokalität und den Zustand im Bilde ist, jedoch selten einem Betreiber oder Eigentümer des Gebäudes ein Gesamtüberblick über bauliche Veränderungen vorliegt.

Darüber hinaus hat sich als problematisch erwiesen, dass an einem Gebäudekomplex häufig eine Vielzahl von unterschiedlichen Unternehmen die jeweils anfallenden Arbeiten, zu denen auch die Schaffung zusätzlicher Durchführungen zählt, durchführen, so dass eine insbesondere einheitliche Dokumentation und Bestandsaufnahme der durchgeführten Arbeiten an derartigen Durchführungen nur schwer möglich ist.

Insgesamt gesehen gibt es eine Vielzahl von Anforderungen an die Ausführung von Kabel- und Rohrabschottungen, welche in Gesetzen, Verordnungen, Normen und Richtlinien auf Bundes-, Landes- und kommunaler Ebene festgelegt sind. Allerdings bieten diese für die Verantwortlichen keine Anweisung oder stellen kein Instrument dar, wie die Erfüllung dieser Anforderungen in praxi sichergestellt werden kann und welche Art der Kontrolle und Dokumentation notwendig ist, um die gesetzlichen Vorgaben überhaupt zu erfüllen. Bisher ist es möglich, durch Managementsysteme, z. B. Qualitätsmanagementsysteme nach DIN ISO 9001 oder integrierte Qualitäts-, Umwelt- und Arbeitssicherheitsmanagementsysteme, Prozessabläufe in Managementsystemhandbüchern abzubilden und Kompetenzen und Verantwortlichkeiten eindeutig festzulegen. Auch der bauliche Brandschutz kann in ein solches System mit einbezogen werden. Auf diese Weise kann die Durchführung von baulichen Maßnahmen an Brandschottungen standardisiert festgeschrieben werden.

Aus Mangel an Methoden und Werkzeugen für die einheitliche Kennzeichnung und Dokumentation von Abschottungen sind eine Identifizierung der einzelnen Abschottung sowie die Dokumentation von deren Zustand und der an der Abschottung jeweils durchgeführten Arbeiten über die gesamte Lebensdauer der Durchführung jedoch bisher nicht möglich. Eine einheitliche, dauerhafte und korrekte Dokumentation, die eine rechtlich aussagekräftige Datenbasis zur Entlastung des Betreibers im Brandfall liefern soll, kann mit den bisher vorhandenen Möglichkeiten zur Kennzeichnung und Datenerfassung nicht sichergestellt werden.

### Offenbarung der Erfindung

Aufgabe der vorliegenden Erfindung ist es, ein Verfahren und eine Vorrichtung bereitzustellen, mit dem in einem komplexen Gebäude die Abschottungen beziehungsweise Durchführungen eindeutig identifiziert, einheitlich erfasst, hinsichtlich ihres Zustandes einheitlich beurteilt und über die gesamte Bestanddauer der Durchführungen dokumentiert werden können.

Eine weitere Aufgabe der vorliegenden Erfindung ist darin zu erblicken, dass die Möglichkeit, eine Brandschutzdokumentation zur Gewährleistung eines Brandschutzes an zentraler Stelle zu erstellen, geschaffen wird, wobei diese Brandschutzdokumentation einen aktuellen und geregelten Datenbestand der Abschottungen beziehungsweise Durchführungen in standardisierter Form umfasst.

Erfindungsgemäß wird ein Verfahren zur Generierung der hierfür notwendigen Datensätzen vorgeschlagen, die sich auf je genau eine Durchführung beziehen. Die eindeutige Identifizierung der Durchführungen wird über einen Kennzeichnungsträger sichergestellt.

Grundlage der Erfindung ist der Lebenszyklus von Bauteildurchführungen, die im Rahmen der Anwendung des Verfahrens entweder als neu erstellte Durchführungen oder als in einem Gebäude bereits bestehende Durchführungen auftreten können. Die Durchführungen unterliegen einem Kreislauf des zerstörenden Öffnens und Wiederherstellens aufgrund von Nachbelegungen mit neuen Medien (Stromkabel, Nachrichtentechnik, Trink- und Abwasserrohre etc.) und Umbauarbeiten. Dieser Kreislauf kann dabei kontrolliert durchlaufen werden oder unkontrolliert durchlaufen werden. Ebenso können die einzelnen Prozesselemente, die Durchführungen, vom unkontrollierten in den kontrollierten Kreislauf wechseln oder umgekehrt. Neu erstellte Durchführungen werden dem Kreislauf zugeführt. Der zentrale Ansatz der vorliegenden Erfindung ist es, die Anzahl der kontrollierten Prozesselemente zu maximieren und die unkontrollierten Elemente in den kontrollierten Prozess zu überführen. Der Rückfall kontrollierter Elemente in den unkontrollierten Prozess soll verhindert werden und neu erstellte Elemente in Gestalt von Durchführungen und Abschottungen sollen dem kontrollierten Prozess zugeführt werden. Diese Übergänge der Elemente, d. h. der Durchführungen und der Abschottungen zwischen Prozessen, sind über den gesamten Lebenszyklus einer Durchführung sicherzustellen und zu dokumentieren.

### Hierdurch lässt sich eine grundlegende Einteilung in vier Kategorien von Abschottungen treffen:

Intakte und defekte Schottungen sind jeweils bekannt und unterliegen dem kontrollierten Prozess. Intakte und defekte Schottungen können auch unbekannt sein, befinden sich demnach im nicht-kontrollierten Prozess. Aus einem weiter untenstehend beschriebenen Mengendiagramm lässt sich die Zielsetzung der Maximierung des Anteils der intakten bekannten Schottungen an allen Schottungen ersehen. Gleichzeitig sind die Mengen der intakten unbekannten sowie der defekten bekannten und der defekten unbekannten Abschottungen beziehungsweise Durchführungen zu minimieren. Dies führt von der bisher praktizierten Dokumentation von Maßnahmen zur Dokumentation der einzelnen Durchführungen und damit von einer unverknüpften, zeitpunktbezogenen Dokumentation zu einer verknüpften, zeitraumbezogenen Dokumentation.

Für die Sicherstellung dieser Form der Dokumentation wird eine neue Form der Kennzeichnung der Abschottungen vorgestellt. Es wird dem erfindungsgemäß vorgeschlagenen Verfahren folgend nunmehr nicht mehr das bei jeder Nachbelegung wechselnde Kennzeichnungsschild eines Herstellers einer Durchführung beziehungsweise einer Abschottung verwendet, sondern ein Kennzeichnungsträger eingesetzt, der die Durchführung selbst dauerhaft kennzeichnet. Damit wird erreicht, dass die Durchführung über ihren gesamten Lebenszyklus innerhalb des Gebäudes eine einzige, eindeutige, dauerhafte, fälschungssichere und von beiden Seiten eines Gebäudeteils aus sichtbare Kennzeichnung erhält. Dies ermöglicht eine redundanzfreie und konsistente Datenhaltung.

In vorteilhafter Weise und zur Erhöhung der Effektivität des erfindungsgemäß vorgeschlagenen Verfahrens wird eine eindeutige, fälschungssichere Kennzeichnung der Durchführungen und darin angeordneter Abschottungen vorgenommen. Dies erfolgt über eine zentral zu vergebende, eindeutige Kennzeichnungsnummer, die rein fortlaufend ist und nach deren Vergabe garantiert ist, dass diese nur einmal vorhanden ist und keine Zweideutigkeiten auftreten. Nur diese fälschungssichere, eindeutige Kennzeichnung wird im Dokumentationssystem verwendet.

Entscheidend hierbei ist, dass die Kennzeichnungsnummer in dauerhafter, gut zugänglicher Weise an der Abschottung beziehungsweise der Durchführung angebracht wird, so dass die Abschottung beziehungsweise die Durchführung jederzeit lokalisierbar und identifizierbar bleibt. Dies gilt auch dann, wenn bauliche Maßnahmen an der Abschottung beziehungsweise der Durchführung durchzuführen sind. Hierfür ist es vorteilhaft, die Kennzeichnungsnummer bereits bei der Herstellung eines Kennzeichnungsträgers auf diesen aufzubringen. Der Kennzeichnungsträger wird bevorzugt aus einem Material gefertigt, welches den Einwirkungen während der Bauphase und während des Betriebs, insbesondere hinsichtlich Temperatur, Feuchtigkeit und Krafteinwirkungen, widersteht. Geeignet sind Kunststoffmaterialien, wie z. B. Polyethylen, Polypropylen, oder ein Verbundwerkstoff, welcher eine aufgeklebte Kunststofffolie umfasst, die auf einen metallischen Werkstoff, insbesondere einen Edelstahl, aufgebracht ist. Die Beschriftung des Kennzeichnungsträgers erfolgt bevorzugt durch Laserverfahren oder Thermotransferdruck oder auch durch Prägung. Durch das Aufbringen der Kennzeichnungsnummer bei der Herstellung des Kennzeichnungsträgers wird zudem eine Doppelvergabe von Nummern verhindert, die im Gegensatz zu vor Ort aufgebrachten Nummerierungen auftreten kann. Die Kennzeichnungsnummer, die dauerhaft auf dem Kennzeichnungsträger angebracht ist, kann darüber hinaus auch in Form eines Barcodes oder als OCR-Code oder in anderer maschinenlesbarer Form beschaffen sein.

Die äußere Gestalt des erfindungsgemäß vorgeschlagenen Kennzeichnungsträgers erlaubt die Kennzeichnung einer Durchführung, wobei der Kennzeichnungsträger durch die Durchführung hindurchragt und an beiden Enden mit der Kennzeichnungsnummer sowie etwaigen maschinenlesbaren Codierungen versehen ist. Die Dimensionierung des Kennzeichnungsträgers berücksichtigt die Wandstärke des entsprechenden Gebäudeteils, sei es eine Wand oder eine Decke beziehungsweise die vorliegende Bauteildicke. Die gängigen Bauteildicken liegen in einem Bereich zwischen 10 cm und 30 cm. Der Kennzeichnungsträger kann wahlweise in dementsprechenden verschiedenen Längen oder in einer einfaltbaren Version zur variablen Anpassung an verschiedene Bauteilstärken ausgeführt werden. Zudem ist auf beiden Seiten ein Überstand an den Enden des Kennzeichnungsträgers von mindestens 10 cm für das Aufbringen der Kennzeichnungsnummer vorgesehen. Die Breite des Kennzeichnungsträgers sollte möglichst klein sein, damit auch ein Einbau in kleine, dicht belegte Durchführungen oder Abschottungen erfolgen kann.

Das Verbauen beziehungsweise Einlegen des erfindungsgemäß vorgeschlagenen Kennzeichnungsträgers in eine Durchführung erfolgt derart, dass der Kennzeichnungsträger in der Durchführung fixiert wird und von beiden Wandseiten des Gebäudeteiles die Kennzeichnungsnummer sichtbar ist. Diese kann zum Zwecke einer Dokumentation bevorzugt fotografisch erfasst werden sowie bei Einsatz von Barcodes oder anderen automatischen Verfahren über Scangeräte erfasst werden. Hierzu bietet sich insbesondere eine digitale Fotodokumentation an. Die Fotodokumentation einer Durchführung beziehungsweise einer dort vorgesehenen Abschottung wird eindeutig über die Kennzeichnungsnummer identifiziert.

Die Fotodokumentation vor und nach der Durchführung von Arbeiten an der Durchführung in Zusammenhang mit der auf dem Foto sichtbaren Kennzeichnungsnummer erlaubt erstmals eine zeitraumbezogene Dokumentation, da durch Vergleich aufeinander folgender Datensätze nicht mehr nur der Zustand der Abschottung beziehungsweise der Durchführung zu einem bestimmten Zeitpunkt, sondern über den gesamten Prozessablauf und damit die Lebensdauer der Durchführung innerhalb des Gebäudes feststellbar ist. Zur zentralen elektronischen Erfassung im Rahmen des Dokumentationssystems eignen sich insbesondere digitale Fotoaufnahmen.

Zur Dokumentation der Durchführungen und der in ihnen eingebauten Abschottungen wird eine Datenstruktur vorgeschlagen, die in technische Daten der Durchführung beziehungsweise der Abschottung und organisatorische Daten unterteilt werden kann. Die Dokumentation orientiert sich dabei primär an der Sicherstellung des ordnungsgemäßen Zustands der Durchführungen beziehungsweise der Abschottungen und der rechtlichen Absicherung. Zur eindeutigen Identifikation von Durchführungen beziehungsweise Abschottungen in dem Dokumentationssystem wird die Kennzeichnungsnummer des Kennzeichnungsträgers als Primärschlüssel verwendet. Hinsichtlich der technischen Daten werden die Kennzeichnungsnummer, der Einbauort, die technisch einwandfreie Ausführung, die Zulassung und eine mögliche Genehmigung im Einzelfall festgehalten. Zudem werden die digitalen Fotos in der Datenbank hinterlegt.

Als organisatorische Daten sind die Daten der beteiligten Stellen und Personen zu nennen, die mit der Durchführung beziehungsweise der dort vorgesehenen Abschottung in deren Lebenszyklus befasst waren, sowie die Zeitpunkte der Erstellung sämtlicher Datensätze. Zu den beteiligten Personen gehören die Mitarbeiter der ausführenden Baufirmen, die Mitarbeiter des Gebäudebetreibers, Prüfer und Sachverständige. Über diese Daten werden sämtliche Aktivitäten an der Datenbank genauestens nachvollziehbar und transparent, besonders im Hinblick auf eine beweiskräftige Aussage zur Exkulpation bei Auftreten eines Schadensfalles.

Neben diesen Daten lässt sich die Datenstruktur dabei auf beliebige weitere Attribute ausbauen. Somit ist das Dokumentationssystem an individuelle Bedürfnisse des Gebäudebetreibers anpassbar. Um eine redundanzfreie und konsistente Datenbasis für alle Anwender zu ermöglichen, wird eine zentrale Datenbank eingerichtet, auf der die erhobenen Daten hinterlegt werden, so dass die Datenbenutzer unabhängig voneinander sind und jeder, der Arbeiten im Bereich einer Durchführung beziehungsweise einer Abschottung ausführt, auf den zugehörigen Datenbestand zugreifen kann. Ferner ist im Rahmen einer zentralen Speicherung und zentralen Datenpflege eine einheitliche Form der Datensätze erreichbar, die daher auch eine Auswertung und einen Vergleich verschiedener Bereiche miteinander ermöglicht.

Um Manipulationen zu verhindern, werden die neu generierten Datensätze in Zusammenarbeit zwischen dem Auftragnehmer, d. h. der Baufirma, und dem Auftraggeber erstellt und in das Dokumentationssystem eingepflegt. Darüber hinaus besteht die Möglichkeit, zusätzliche Protokolldatensätze in das Dokumentationssystem einzupflegen, um auch außerhalb der Durchführung von Baumaßnahmen Zustandsmeldungen erfassen zu können oder um nachträgliche Aufnahmen bisher nicht dokumentierter Durchführungen beziehungsweise nicht dokumentierter Abschottungen zu ermöglichen.

Die so erfassten Datensätze stellen in eindeutiger und standardisierter Weise Informationen allen Beteiligten, wie z. B. dem Betreiber, dem Eigentümer, Versicherungsunternehmen, Sicherheitsdiensten, Bauunternehmen und dergleichen, zur Verfügung, die mit der Erstellung zusätzlicher Durchführungen, der Wartung bereits bestehender Durchführungen oder der Veränderung von Durchführungen im Rahmen von Bau- und Installationsarbeiten etc. befasst sind. Das erfindungsgemäß vorgeschlagene Verfahren lässt sich in ein bereits vorhandenes Qualitätsmanagementsystem einbinden, wozu sich Standardanweisungen nutzen lassen, welche sich insbesondere auf Verantwortlichkeiten und Handhabung von Daten beziehen, vergleiche DIN ISO 9001.

Über das erfindungsgemäß vorgeschlagene Verfahren wird sichergestellt, dass eine genaue Nachvollziehbarkeit und Transparenz des Dokumentationsprozesses gegeben ist und alle Beteiligten eindeutig identifiziert werden können.

Im Rahmen des Dokumentationsprozesses erfolgt eine Dokumentation der einzelnen Abschottungen beziehungsweise Durchführungen über ihre Lebensdauer gesehen und nicht nur hinsichtlich der durchgeführten Baumaßnahmen, so dass eine lückenlose Historie der Durchführung beziehungsweise eines Brandschutzes bereitgestellt werden kann. Durch eine zentrale Erfassung von Kabel- oder Rohrabschottungen an einer zentralen Stelle ist eine dauerhafte und sichere Speicherung in elektronischer Form in einer Datenbank gegeben. Die Verwaltung und Überwachung dieser Datenbank erfolgt durch eine neutrale Stelle, um Interessenskonflikte zu vermeiden und die Beweiskraft der Daten zu erhöhen, da keine Möglichkeit zur Löschung von Daten hinsichtlich der Vollständigkeit der Historie durch den Benutzer zugelassen ist.

Insbesondere wird eine eindeutige Kennzeichnung der Durchführungen beziehungsweise der dort vorhandenen Abschottungen durch einfache fortlaufende Nummern erreicht, wobei eine zentrale Vergabe der Nummern durch eine verantwortliche Stelle erfolgt. Es ist sichergestellt, dass nur die von dieser verantwortlichen Stelle vergebenen Kennzeichnungsnummem für Abschottungen in die Datenbank zu Dokumentationszwecken eingepflegt werden, so dass Doppelvergaben ausgeschlossen sind. So können im Rahmen des erfindungsgemäß vorgeschlagenen Verfahrens Datensätze über Schotts oder Durchführungen durch das ausführende Unternehmen, d. h. den Auftragnehmer (die beauftragte Baufirma), erstellt werden. Der Auftraggeber überprüft und nimmt die durch den Auftragnehmer erstellten Datensätze für die jeweilige Durchführung beziehungsweise das jeweilige Schott ab.

In vorteilhafter Weise lässt sich eine Bilddokumentation aufbauen zum Nachweis der ordnungsgemäßen Ausführung des Auftrages beziehungsweise der Instandsetzung durch das ausführende Bauunternehmen und zum Nachweis des kontrollierten Prozesses zum Umfang mit Abschottungen. Im Dokumentationssystem ist die Menge der Datensätze beziehungsweise die Datenmenge auf die Daten begrenzt, die für die Sicherstellung einer ordnungsgemäßen Ausführung einer Abschottung beziehungsweise einer Durchführung und der Verkehrssicherheit des Gebäudes erforderlich ist.

### Zeichnung

Anhand der Zeichnung wird die Erfindung nachstehend eingehender beschrieben.

Es zeigt:
- Figur 1: eine Darstellung mehrerer Prozesskreisläufe zur Dokumentation von Durchführungs-relevanten Ereignissen,
- Figur 2.1: eine Durchführung in einem Gebäudeteil in einer perspektivisch wiedergegebenen Vorderansicht,
- Figur 2.2: eine Durchführung in einen Gebäudeteil in einer perspektivisch wiedergegebenen Vorderansicht nach Verschluss durch eine Abschottung,
- Figuren 3.1 und 3.2: Schnitte durch eine Durchführung durch ein Gebäudeteil, wobei die Leitungen, die die Durchführung passieren, weggelassen sind,
- Figur 4: eine Datenbankstruktur mit den Datenclustern Durchführung, Status der Durchführung, protokollbezogene Daten, Protokolldaten, Untemehmensdaten, Mitarbeiterdaten, Auftragsdaten und durchführungsidentifizierenden Daten,
- Figur 5: die Darstellung der Regenerierung von Kennzeichnungsträgern und deren nachfolgende Weiterverarbeitung,
- Figuren 6.1 und 6.2: in Form eines Flowcharts die Einpflege von durchführungsrelevanten Daten,
- Figur 7: ein Flowchart zur Erstellung von durchführungsrelevanten Datensätzen und
- Figur 8: ein Mengendiagramm von vier Klassen von Durchführungen beziehungsweise Abschottungen.

### Ausführungsvarianten

Unter Durchführungen wird nachfolgend eine Öffnung in einem Gebäudeteil, wie z. B. einer Wand, einer Decke oder einer Bodenfläche, verstanden, durch welches Medienleitungen verlaufen. Der Durchführung ist in der Regel ein Schott zugeordnet, bei dem es sich in den meisten Fällen um ein Bauteil handelt, welches extremer Hitzeentwicklung widersteht und welches die Ausbreitung von Feuer und Rauch im Gebäude über eine bestimmte Zeitdauer verhindern soll.

Bei den Medienleitungen handelt es sich in den meisten Fällen um Leitungen, wie z.B. Wasserleitungen, Frischwasserleitungen, Abwasserleitungen, um Gasleitungen, Elektrizitätsleitungen, Datenübertragungsleitungen, Zuleitungen zu Sprinkleranlagen, um Luftschächte von Klimaanlagen, Zuluftschächte, Abluftschächte und dergleichen mehr. Die Medienleitungen können auch gebündelt in Schächten oder in Kabelbündeln verlaufen, dies spielt in Zusammenhang mit den nachfolgenden Ausführungen eine untergeordnete Rolle.

Das nachstehend in Bezug auf die Erläuterung und Beschreibung von Durchführungen und Schotts genannte Gebäudeteil ist ein Teil eines Gebäudes, bei dem es sich z. B. um ein öffentlich zugängliches Gebäude, wie einen Flughafen, einen Bahnhof, ein Krankenhaus oder dergleichen, handelt; mithin ein Gebäude, in dem sich eine sehr große Anzahl von Menschen zur gleichen Zeit aufhält. Das Verfahren ist jedoch prinzipiell auf Gebäude jedweder Art und Größe anwendbar.

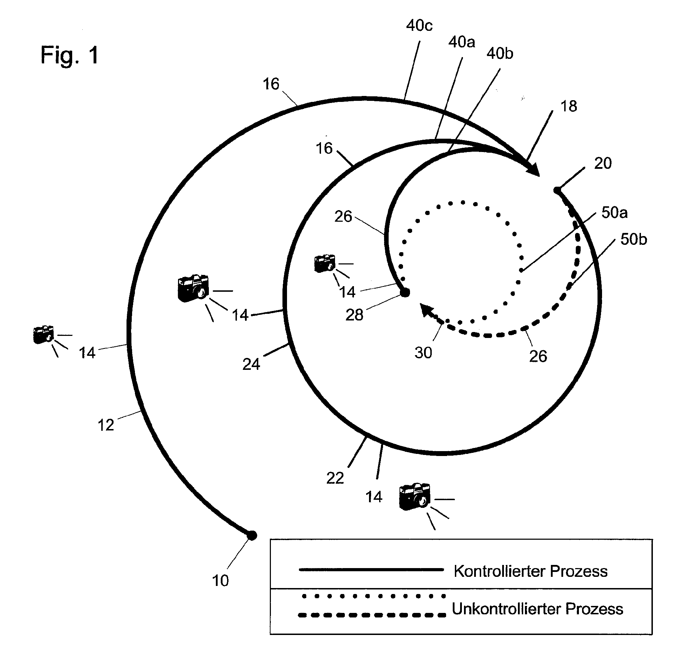

Der Darstellung gemäß Figur 1 ist ein Prozesskreislauf zur kontinuierlichen Erfassung und Dokumentation von in einem Gebäude befindlichen bekannten, unbekannten, defekten oder intakten Durchführungen beziehungsweise dort angeordneten Schotts zu entnehmen.

Ausgehend von einer geplanten neuen Durchführung 10 wird diese im Rahmen eines beherrschbaren Prozesses 40c in einem Gebäudeteil eines Gebäudes erstellt. Die Erstellung der neuen Durchführung beziehungsweise des neuen Schotts ist in der Darstellung gemäß Figur 1 durch Bezugszeichen 12 gekennzeichnet. Nach der Erstellung einer neuen Durchführung 12 beziehungsweise eines neu dort angeordneten Schotts wird dieses im Rahmen einer Bilddokumentation 14 dokumentiert und in einem sich daran anschließenden Dokumentationsschritt 16 hinsichtlich aller relevanten Daten erfasst. Danach schließt sich eine Einpflege 18 in ein Dokumentationssystem an. Eine bereits bekannte Durchführung, die intakt ist, ist durch Bezugszeichen 20 in der Darstellung gemäß Figur 1 identifiziert. Diese intakte, bekannte Durchführung 20 beziehungsweise ein dort angeordnetes Schott wird ebenfalls im Rahmen eines kontrollierten Prozesses 40a einer Bilddokumentation 14 zugeführt. Tritt an diesem intakten, bekannten Schott 20 ein Zerstörungsereignis 22 auf, so z. B. ein Brandfall oder ein Öffnen im Rahmen von Nachbelegungen oder Bauarbeiten, erfolgt eine Instandsetzung 24 dieses bekannten Schotts. Nach Durchführung der Instandsetzungsarbeiten wird die instand gesetzte Durchführung beziehungsweise das dort befindliche Schott ebenfalls einer Bilddokumentation 14 zugeführt, und im Rahmen eines Dokumentationsschritts 16 erfolgt eine Einpflege 18 in das Dokumentationssystem.

Das intakte beziehungsweise bekannte Schott 20 kann im Rahmen eines nicht kontrollierten Prozesses 50b kritisch werden, wenn z. B. ein Dokumentationsverlust 26 auftritt. Fällt das Schott später im Rahmen von Begehungen wieder als nicht kontrolliert auf, so besteht über die Bilddokumentation 14 die Möglichkeit, die genaue Veränderung des Schotts seit dem letzten Dokumentationsschritt nachzuvollziehen und geeignete Maßnahmen in dem betroffenen Bereich einzuleiten, um einem erneuten Rückfall vorzubeugen.

Ferner finden sich in einem Gebäude unbekannte und defekte Durchführungen 28 in einem unkontrollierten Prozess 50b, die erst im Rahmen eines Zerstörungsereignisses 22, so z. B. einer Öffnung im Rahmen von Nachinstallationsarbeiten oder durch Gebäudebegehungen und bei Prüfungen durch Sachverständige, entdeckt werden und instand gesetzt werden. Durch eine Fotodokumentation 14 und einen Dokumentationsschritt 16 werden diese bis dato unbekannten Durchführungen beziehungsweise Schotts erfasst und im Rahmen eines kontrollierten Prozesses 40b einer Einpflege 18 in das Dokumentationssystem unterzogen. Auch im Rahmen einer Zerstörung 30 einer bis dato unbekannten Durchführung beziehungsweise eines bis dato unbekannten Schotts kann nach der Instandsetzung über eine Fotodokumentation 14 dieses im Rahmen des Dokumentationsschrittes 16 erfasst und identifiziert werden und innerhalb der Einpflege 18 in das Dokumentationssystem aufgenommen werden.

Beim kontinuierlichen Durchlaufen der kontrollierten Prozesse 40b wird die Zahl unbekannter Durchführungen beziehungsweise dort vorhandener Schotts kontinuierlich reduziert, da diese im Rahmen der Fotodokumentation 14 beziehungsweise des Dokumentationsschrittes 16 kontinuierlich erfasst und dokumentiert werden und damit zu bekannten Durchführungen beziehungsweise Schotts werden. Durch das erfindungsgemäß vorgeschlagene Verfahren wird ein Rückfall bekannter, erfasster Durchführungen beziehungsweise Schotts in einen vagabundierenden Zustand verhindert und neu aufgefundene Durchführungen beziehungsweise Schotts durch neu erstellte Durchführungen 10 beziehungsweise Schotts in den Kreislauf der Dokumentation und Erfassung eingeflochten.

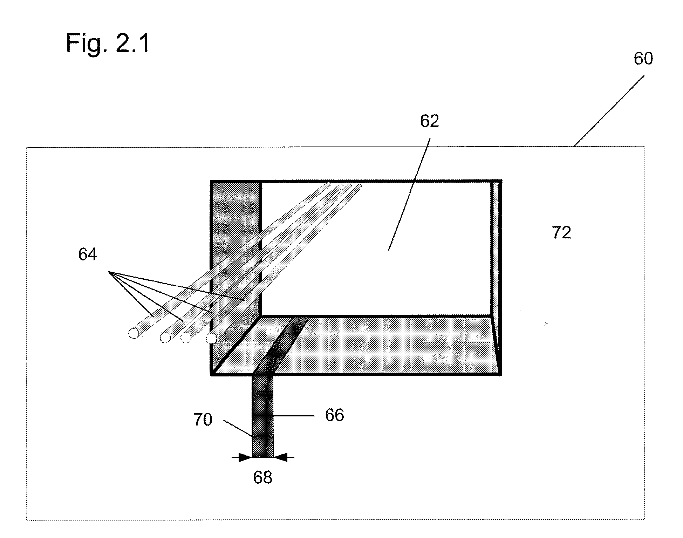

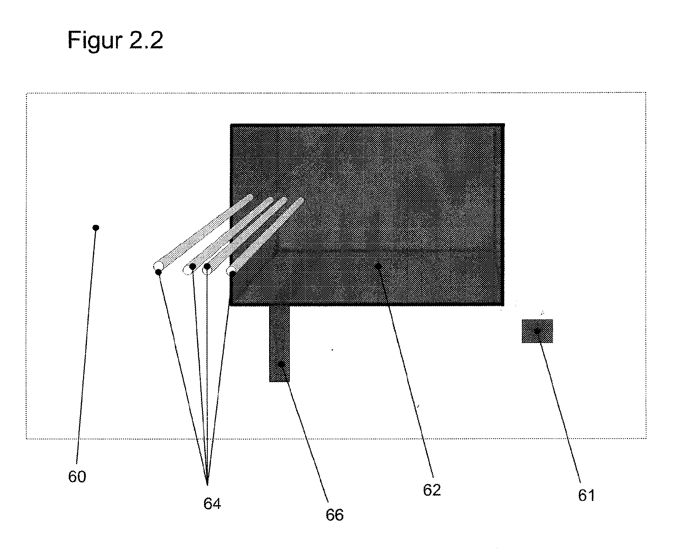

Der Darstellung gemäß Figur 2.1 ist ein Gebäudeteil - hier eine Wand - zu entnehmen, in dem sich eine Durchführung befindet, durch die Medienleitungen verlaufen und die mittels eines Schotts verschließbar ist.

Bei dem Gebäudeteil 60 handelt es sich im Falle der Darstellung gemäß Figur 2.1 um eine Wand. Daneben könnte eine in Figur 2.1 dargestellte Durchführung 62 auch in einer Decke oder in einem einfach oder doppelt ausgebildeten Fußboden ausgebildet sein. Bei den die Durchführung 62 durchziehenden Leitungen 64 kann es sich um Signalleitungen, Elektrizitätsleitungen, Versorgungsleitungen für Frischwasser und Abwasser oder um Luftschächte von Klimaanlagen oder um Öl- oder Gasleitungen und dergleichen handeln. Der Übersichtlichkeit halber sind in der Darstellung gemäß Figur 2.1 nur einige Leitungen 64 gezeigt. In Bezug auf die Leitungen 64 treten in Gebäuden auch durchaus Durchführungen 62 auf, in denen die Leitungen 64 wesentlich dichter gepackt verlaufen oder zu Leitungssträngen zusammengeführt sind.

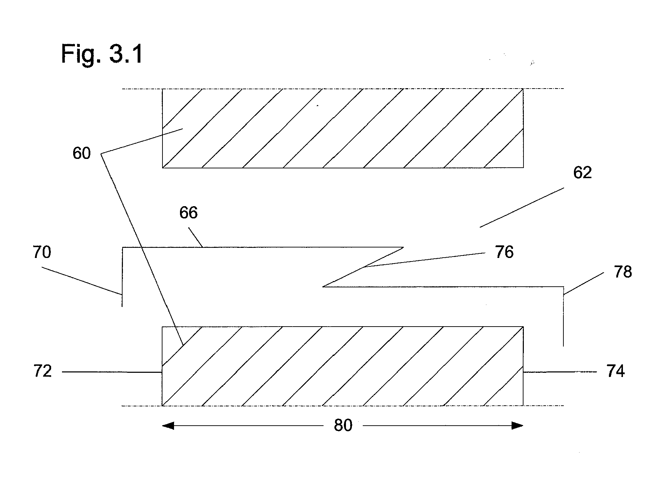

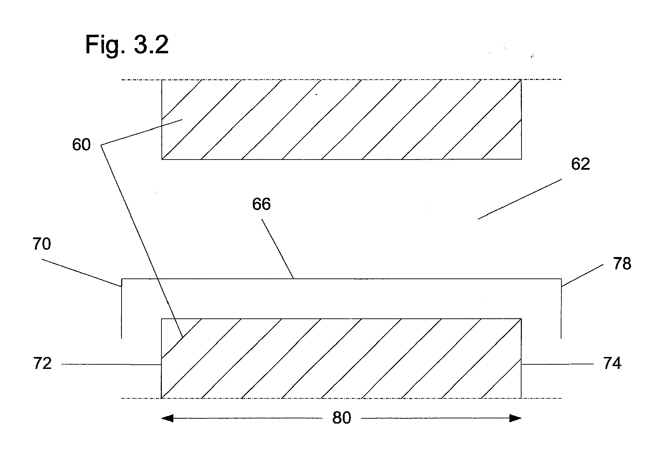

Die in Figur 2.1 dargestellte Durchführung 62 wird mit einem z. B. mit der Begrenzungswand der Durchführung 62 verbundenen, z. B. in diese eingelegten Kennzeichnungsträger 66 versehen. Durch den Kennzeichnungsträger 66 wird die Durchführung 62 in Bezug auf deren Vorderseite 72 und deren Rückseite 74 auf beiden Seiten eindeutig und fälschungssicher gekennzeichnet. Da die Durchführung 62 nunmehr auf beiden Seiten, d. h. der Vorderseite 72 und der Rückseite 74, markiert ist, ist, unabhängig davon, von welcher Seite her Arbeiten durchgeführt werden oder eine Fotodokumentation 14 erfolgt, stets eine eindeutige Zuordnung des Kennzeichnungsträgers 66 zur Durchführung 62 gewährleistet. Der Kennzeichnungsträger 66, der bevorzugt schmal, d. h. in einer geringen Breite 68, ausgeführt ist, enthält an beiden Endbereichen 70 beziehungsweise 78 (vergleiche Darstellung gemäß Figur 3) identische fortlaufende Kennzeichnungsnummern, die durch ihre Größe und einen guten Kontrast zum Untergrund auf einem im Rahmen der Bilddokumentation 14 erstellen Foto sicher zu erkennen sind. Die beiden Seiten des Kennzeichnungsträgers 66 werden durch die Kennzeichnung "A" und "B" deutlich gemacht, so dass später im Rahmen der Bilddokumentation 14 auch nachzuvollziehen ist, von welcher Bauteilseite die jeweiligen Arbeiten durchgeführt und die Bilder erstellt wurden.

Der Kennzeichnungsträger 66 kann sowohl im Rahmen eines Ersteinbaus in die Umfassung einer Durchführung 62 verbaut werden als auch im Rahmen einer Nachbelegung, so z. B. nach Entdeckung einer defekten und unbekannten Durchführung 28, in dieser verbaut werden. Der Kennzeichnungsträger 66 baut extrem flach, so dass dessen Montage die Eigenschaften einer in die Durchführung 62 eingebauten Schottung nicht negativ beeinflusst werden, demnach kein Brand-, Wärme- oder Rauchübertritt auf die feuerabgewandte Seite begünstigt oder beschleunigt wird.

Aus Figur 2.2 geht eine die Durchführung 62 verschließende Abschottung, die als Brandschott ausgeführt sein kann, hervor sowie ein Kennzeichnungsschild 61 auf der Vorderseite 72 des Gebäudeteils 60, hier dargestellt als Wand.

Figur 3.1 zeigt einen Schnitt durch eine Durchführung in einem Gebäudeteil 60, hier einer Wand, wobei die Durchführung 62 sich im Gebäudeteil 60 in einer Tiefe 80 erstreckt. Wie aus Figur 3 erkennbar, ist der erste Endbereich 70 des streifenförmig ausgeführten Kennzeichnungsträgers 66 an der Vorderseite 72 umgeknickt; ferner ist der zweite Endbereich 78 des streifenförmigen Kennzeichnungsträgers 66 an der Rückseite 74 ebenfalls abgeknickt. Um unterschiedlichen Tiefen 80 der Durchführung 62 gerecht zu werden, kann der Kennzeichnungsträger 66 eine Einfaltung 76 aufweisen, so dass der Kennzeichnungsträger 66 problemlos an unterschiedliche Tiefen 80 des jeweiligen Gebäudeteiles 60 angepasst werden kann. Des Weiteren können die Kennzeichnungsträger 66 auch in unterschiedlichen, an Standardmaße von Gebäudeteilen 60 angepassten Längen produziert werden, wie in Figur 3.2 dargestellt ist.

Der Kennzeichnungsträger 66 kann aus einem Kunststoff, wie z. B. Polyethylen oder Polypropylen, gefertigt werden. Alternativ besteht die Möglichkeit, den Kennzeichnungsträger 66 als Verbund aus einer selbstklebenden Kunststofffolie aus den oben genannten Materialien in Verbindung mit einem Metallstreifen z. B. aus Edelstahl zu fertigen. Die Beschriftung des streifenförmigen Kennzeichnungsträgers 66 erfolgt beispielsweise durch Laserbeschriftung und Thermotransferdruck, so dass die Beschriftung dauerhaft vorhanden bleibt. Am Kennzeichnungsträger 66 werden bevorzugt im Bereich der Endbereiche 70, 78 Aktivierungscodes aufgebracht, die z. B. abtrennbar als Abreißetikett oder Klebeetikett in den Endbereichen 70 beziehungsweise 78 des Kennzeichnungsträgers 66 ausgebildet sind.

Das vorstehend erwähnte Edelstahlmaterial weist eine hohe Beständigkeit gegen chemische und mechanische Beanspruchung und Zerstörung auf, zudem ermöglicht dieses Material eine gute Formbarkeit beim Einbau. Die Querschnittsfläche des in den Figuren 2.1, 2.2, 3.1 und 3.2 dargestellten Kennzeichnungsträgers 66 ist so gering im Verhältnis zu den z. B. durch die Durchführung 62 durchgeführten Leitungen 64, dass dessen Anteil am Wärmetransport vernachlässigbar ist.

Grundlegend für die sichere Funktion des Kennzeichnungsträgers 66 ist der Umstand, dass der Kennzeichnungsträger 66 aus einem Stück gefertigt ist. Die erforderliche Länge des Kennzeichnungsträgers 66 ergibt sich aus der Dicke des Gebäudeteils 60 beziehungsweise den zur Sicherstellung der Feuerwiderstandsdauer nötigen Bauteildicken von Abschottungen. Die gängigen Bauteildicken von Abschottungssystemen liegen unter 30 cm, gängige Wand- und Deckenstärken des Gebäudeteils 60 liegen im Bereich zwischen 11,5 cm und 30 cm. Der Kennzeichnungsträger 66 kann in beliebigen Längen gefertigt werden, so dass sich auf der Vorderseite 72 und der Rückseite 74 des Gebäudeteils 60 jeweils ein Überstand in der Größenordnung von 10 cm einstellt. Die Einfaltung 76, wie in Figur 3.1 dargestellt, erlaubt es, den Kennzeichnungsträger 66 auf mehrere cm Länge einzukürzen, ohne diesen aufzutrennen; dieser bleibt demnach als ein Bauteil erhalten. Bei Kennzeichnungsträgern 66, die ab Herstellung auf die Stärke des Gebäudeteiles 60 und/oder die Tiefe 80 der Durchführung 62 abgestimmt sind (vergleiche Darstellung gemäß Figur 3.2), kann die Einfaltung 76 entfallen. Auf dem Kennzeichnungsträger 66 ist die Schott- oder Durchführungsnummer als eindeutige Kennzeichnung in ausreichender Größe für die Bilddokumentation 14 aufgebracht.

Je geringer die Breite 68 des Kennzeichnungsträgers 66 gewählt werden kann, desto günstiger ist der Einbau des Kennzeichnungsträgers 66 auch in kleine, dicht belegte Durchführungen 62, die auch einen anderen als einen rechteckförmigen Querschnitt aufweisen können. Die Beschränkung der Breite 68 des streifenförmigen Kennzeichnungsträgers 66 ergibt sich aus dem Platzbedarf für die Kennzeichnungsnummer, vor allem für die großformatig aufgebrachte Kennzeichnungsnummer des Schotts. Eine bevorzugte Breite des Kennzeichnungsträgers 66 liegt in der Größenordnung von 2 cm.

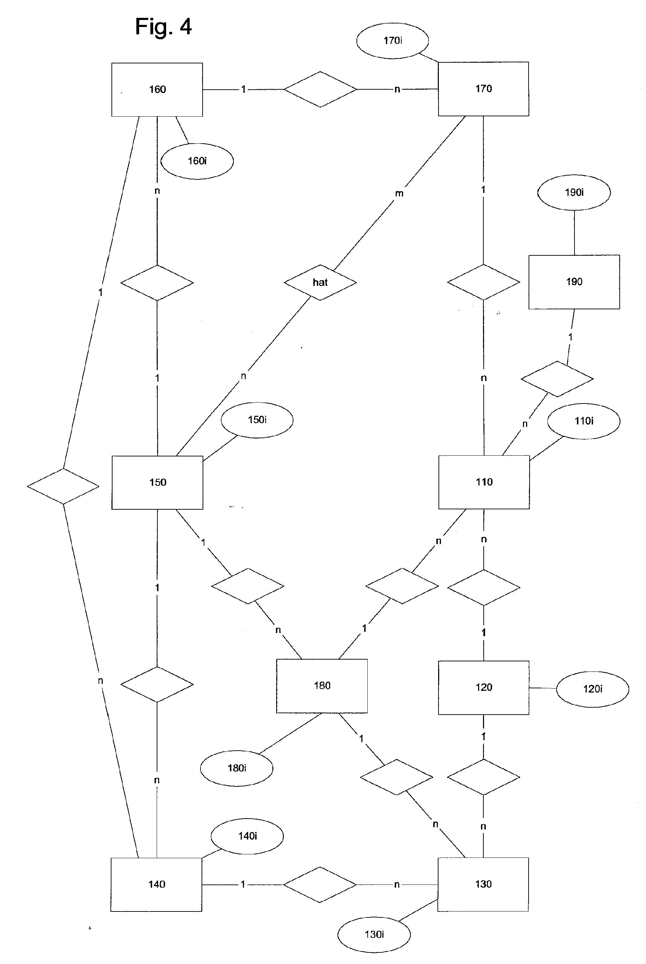

Figur 4 ist eine Datenbankstruktur zu entnehmen, die eine Anzahl von Clustern aufweist, denen jeweils clusterbezogene Daten zugeordnet sind.

Aus Figur 4 geht die Vernetzung der einzelnen Cluster miteinander hervor. Ein erstes Cluster 110 ist durch die mit der Durchführung 62 verbundenen Daten gegeben. Die dem Cluster 110 zuzuordnenden Datensätze sind durch Bezugszeichen 110ᵢ gekennzeichnet und umfassen z. B. einen sich auf das der jeweiligen Durchführung zugeordnete Schott beziehenden Schottdatensatz, die Schottnummer, den Status des Schotts, den Bearbeitungszustand, eine Fotodokumentation vorher/nachher, gegebenenfalls eine Information darüber, ob es sich um eine neu erstellte Durchführung mit dieser zugeordnetem Schott handelt, gegebenenfalls um eine Auftragsnummer sowie um ein Bemerkungsfeld. Schottnummer und Kennzeichnungsnummer sind identisch.

Ein weiteres Cluster 120 umfasst auf den Status eines Schotts abstellende Daten. Der dazugehörige Datensatz ist durch 120ᵢ gekennzeichnet und umfasst Informationen hinsichtlich der Benennung des Schotts, gegebenenfalls eine Beschreibung des Schotts sowie eine Information über den Status des Schotts.

Bezugszeichen 130 identifiziert einen Cluster, der sich auf protokollbezogene Daten bezieht. Im Rahmen einer Protokollierung, die im Cluster 130 hinterlegt ist, sind Informationen über den Ist-Zustand der Durchführung beziehungsweise des Schotts hinterlegt, ferner ein Nachweis über ein Erstellungsdatum, die Schottnummer, ein Protokolldatensatz, gegebenenfalls eine Protokollnummer sowie eine Information dahingehend, ob der Protokollprozess kontrolliert ist oder nicht. Diese Daten sind durch Bezugszeichen 130ᵢ gekennzeichnet.

Im Cluster 140 sind Protokolldaten hinterlegt. Der dazugehörige Datensatz ist durch Bezugszeichen 140ᵢ gekennzeichnet und umfasst Informationen über eine Unternehmensnummer, über eine Protokollnummer, die Erstellung, gegebenenfalls eine Erstellernummer sowie eine Beschreibung.

Cluster 150 umfasst Daten, die sich auf ein Unternehmen beziehen, welches z. B. mit der Erstellung einer neuen Durchführung beziehungsweise eines neuen Schotts, vergleiche Darstellung gemäß Figur 1, Position 10, betraut ist oder betraut wird. Neben Informationen über die Adresse des Unternehmens werden Ansprechpartner und weitere organisatorische Daten im Rahmen eines Datensatzes 150ᵢ hinterlegt.

Schließlich umfasst die Datenbankstruktur 100 ein Cluster 160, welches sich auf Mitarbeiterdaten bezieht. Bei den im Cluster 160 hinterlegten Daten handelt es sich um solche, die sich auf Mitarbeiter eines Betreibers eines Gebäudes beziehen, die mit der Pflege der Datenbankstruktur 100 betraut sind. Auch hier sind im Rahmen eines Datensatzes 160ᵢ verschiedene Informationen speicherbar, die sich z. B. auf eine Mitarbeiternummer, Telefonnummer, Telefax, Namen, Vornamen, Abteilung, Passwort, Kennungen und dergleichen beziehen.

Des Weiteren umfasst die Datenbankstruktur 100 ein Cluster 170, welches auftragsbezogene Daten enthält. Diese Datensätze sind durch 170ᵢ gekennzeichnet und umfassen Informationen hinsichtlich der Auftragsnummer, einer Verwalternummer, einer Beschreibung, einer Bearbeiternummer und Informationen über den Umfang des Auftrags, dessen Durchführung und den Status des Auftrags.

Schließlich umfasst die Datenbankstruktur 100 gemäß der Darstellung in Figur 4 ein Cluster 180, in dem Daten zur Abschottung innerhalb der in den Figuren 2 und 3 dargestellten Durchführungen 62 enthalten sind. Neben der Schottnummer, die der auf dem Kennzeichnungsträger 66 aufgebrachten Kennzeichnungsnummer entspricht, sind im Cluster 180 Informationen über die Raumkennungen der Räume hinterlegt, welche durch das in den Figuren 2 und 3 dargestellte Gebäudeteil 60 voneinander getrennt sind. Bei diesen Räumen kann es sich um nebeneinander liegende Räume handeln oder um durch eine Decke oder eine Bodenfläche übereinander liegend getrennte Räume.

Ein Cluster 190 enthält die Daten 190ᵢ, die für den jeweiligen Schottdatensatz festlegen, in welchem Bearbeitungszustand sich dieser befindet, ob er erstellt wurde, abgenommen wurde und bereits eingepflegt ist, oder ob er vom Auftraggeber als fehlerhaft zurückgewiesen worden ist, zudem darüber, wer gegebenenfalls Zustandsänderungen vorgenommen hat.

Der Dokumentationsprozess hinsichtlich einer Dokumentation von Durchführungen 62 und in diesen vorhandenen Kabel- beziehungsweise Rohrabschottungen gliedert sich in verschiedene Hauptprozesse:
1. Die Beauftragung einer neutralen internen oder externen Dokumentationsstelle und die Einrichtung einer zentralen Datenbank als Grundlage des Gesamtprozesses,
2. die Einrichtung von Unternehmensprofilen und Benutzerkonten,
3. die Erstellung von Kennzeichnungsträgern 66,
4. die Einstellung neuer Aufträge in das Dokumentationssystem,
5. die Erstellung von Datensätzen durch Mitarbeiter des Auftragnehmers,
6. die Überprüfung von Datensätzen durch Mitarbeiter des Auftraggebers und anschließende Einpflege 18 in das Dokumentationssystem,
7. die Erstellung von Prüfprotokollen und deren Einpflege 18 in das Dokumentationssystem.

Grundlegend bei der Auswahl der Stelle, die die Dokumentation verwaltet und überwacht, ist deren Neutralität, unabhängig davon, ob eine unternehmensinterne oder eine untemehmensexteme Lösung bevorzugt wird. Es sollte sichergestellt sein, dass bei allen späteren Prozessen die Daten nicht nachträglich verändert und manipuliert werden können. Um sicherzustellen, dass verschiedene Personen auf Daten zur ein und derselben Durchführung 62 beziehungsweise auf Daten des darin enthaltenen Schotts zugreifen können, ist einer zentralen Speicherung der Vorzug zu geben. Um die Einpflege der Daten durch die ausführenden Firmen zu ermöglichen, wird eine internetbasierte Lösung bevorzugt, bei der sämtliche Daten in einer zentralen Datenbank vorgehalten werden und über ein Internetportal eingepflegt und überprüft werden.

Hinsichtlich des zweiten oben genannten Schrittes, der Einrichtung von Unternehmensprofilen und Benutzerkonten, sind Zugriffsrechte für die einzelnen Benutzer festzulegen. Die Erstellung der Kennzeichnungsträger 66 wird in einer zentralen Stelle für alle im Dokumentationssystem einpflegbaren Kennzeichnungsnummern durchgeführt. Da jede Kennzeichnungsnummer des Kennzeichnungsträgers nur ein einziges Mal vergeben wird, ist eine Einzelverfolgung der Kennzeichnungsträger 66 nicht erforderlich. Um die Möglichkeit einer Mehrfachverwendung von Kennzeichnungsnummern auszuschließen, wird jeder Kennzeichnungsträger 66 mit einem Aktivierungscode versehen, der für die Erstellung des ersten Datensatzes zu einem Schott bei Eingabe in die Datenbank abgefragt wird. Der Aktivierungscode befindet sich als Etikett auf dem Kennzeichnungsträger 66 und kann nur einmal verwendet werden.

Die Einstellung neuer Aufträge durch den Auftraggeber in das Dokumentationssystem gemäß 4. erfolgt über eine Maske und die Erstellung einer Auftragsnummer zur Identifikation des Auftrags. Zu diesem jeweiligen Auftrag wird ein Freischaltungscode generiert, der dem Auftragnehmer zusammen mit der Auftragsnummer übermittelt wird. Nur mittels des Freischaltungscodes ist es einem Auftragnehmer möglich, einen Auftrag und die dazugehörigen Daten im Dokumentationssystem für sich nutzbar zu machen. Hinsichtlich der Erstellung der Datensätze gemäß der Cluster, wie in Figur 4 dargestellt, sind diese nach Auftragsvergabe durch den Auftraggeber und der Übermittlung des Freischaltungscodes an den Auftragnehmer mit den Kennzeichnungsträgern 66 in Beziehung gesetzt. Der Auftragnehmer baut die Kennzeichnungsträger 66 im Rahmen der durchgeführten Bauarbeiten in die Durchführungen 62 im Gebäudeteil 60 ein. Ihm obliegt, alle notwendigen Daten zu erfassen. Dazu zählen die Schott- beziehungsweise Durchführungskennzeichnungsnummer, eine Information über die an das Gebäudeteil 60 angrenzenden Räume, eine Fotodokumentation 14 vor und nach der Erstellung einer neuen Durchführung 62 beziehungsweise eines neuen Schotts und die Erfassung des Status' der Durchführung 62 beziehungsweise der Abschottung nach Ende der Einbauarbeiten.

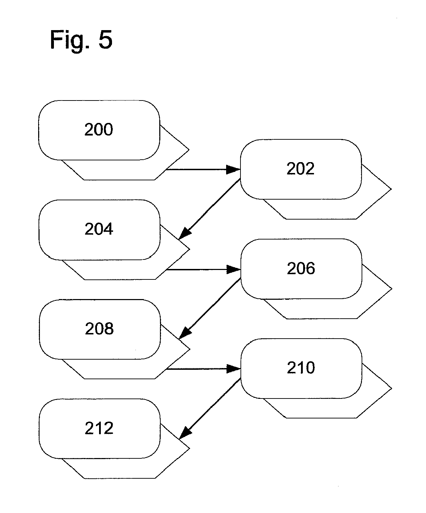

Dieses Prozedere lässt sich der Darstellung gemäß Figur 5 entnehmen, wonach in einer Zentrale 200 Kennzeichnungsträger 66 erstellt werden, die jeweils nur eine Kennzeichnungsnummer zur eindeutigen Identifikation einer Durchführung 62 aufweisen. Die einzelnen Kennzeichnungsträger 66 werden einer zentralen oder dezentralen Lagerung 202 zugeführt, die wiederum eine Distribution 204 an diejenigen Firmen beziehungsweise Unternehmen vornimmt, die mit Arbeiten an Durchführungen 62 beziehungsweise an Schotts befasst sind. Im Rahmen einer Baumaßnahme 206 erfolgt der Verbau der Kennzeichnungsträger 66 bei der Neuerstellung 10 einer Durchführung 62 oder im Rahmen einer Nachbelegung an einer aufgefundenen beziehungsweise in einem Gebäude entdeckten Durchführung. Im Rahmen einer Dokumentation 208 erfolgt die Erstellung einer Dokumentation des jeweiligen Auftrags durch das Unternehmen und die Überprüfung 210 der Dokumentation durch den Auftraggeber, der den zur jeweiligen Baumaßnahme erforderlichen Auftrag an das Unternehmen erteilt hat, danach erfolgt eine Einstellung 212 des Datensatzes in die Datenbankstruktur 100.

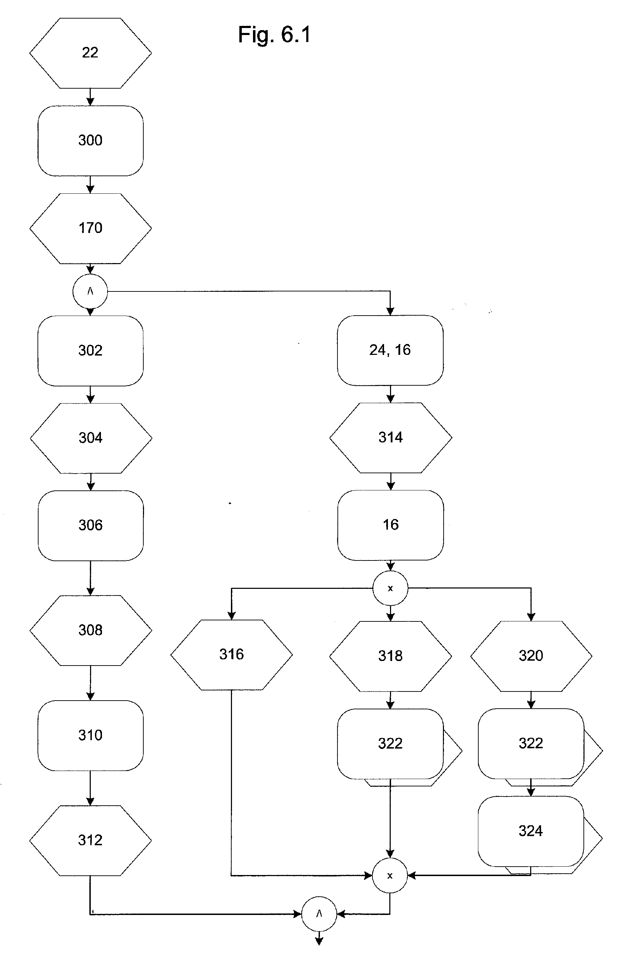

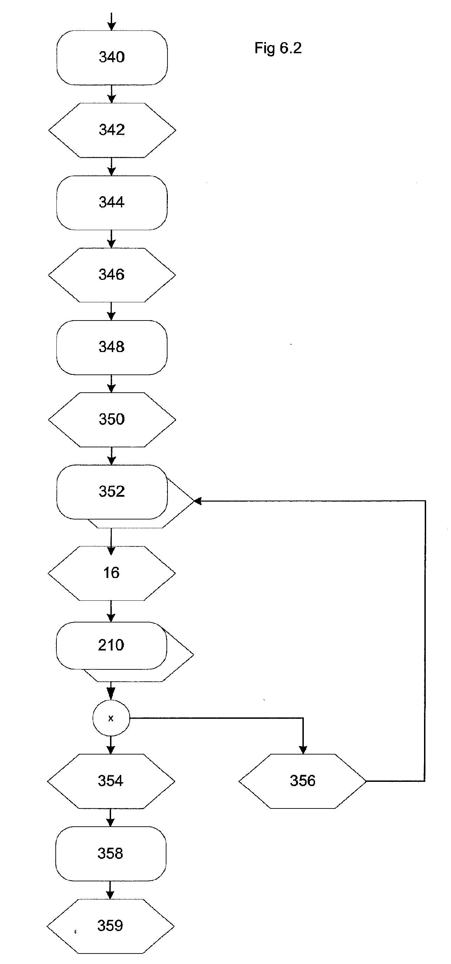

In den Figuren 6.1 und 6.2 ist der Schritt 5, d. h. die Erstellung von Datensätzen durch Mitarbeiter des Auftragnehmers und der Zugriff auf das Dokumentationssystem, dargestellt.

Schon während der laufenden Bauphase oder nach Abschluss der Arbeiten greift der Mitarbeiter des ausführenden Unternehmens über ein Benutzerkonto auf das Dokumentationssystem zu. Eine Freischaltung seiner Aufträge erfolgt über den zugeteilten Freischaltungscode. Ist ein Auftrag einmal freigeschaltet, so steht dem jeweiligen Mitarbeiter dieser bei jedem erneuten Zugriff auf das Dokumentationssystem zur Verfügung. Nach dem Auftreten eines Zerstörungsereignisses 22 erfolgt die Beauftragung 300 eines Unternehmens, was in der Generierung 170 eines auftragbezogenen Datensatzes mündet. Nach Auftragseingabe 302 wird diese im Rahmen einer Bestätigung 304 bestätigt und ein Freischaltcode generiert (306). Nach Generierung 306 des Freischaltcodes erfolgt erneut eine Bestätigung 308 und eine Übermittlung 310 des Freischaltcodes an den Auftragnehmer. Daraufhin erfolgt eine erneute Bestätigung 312. Nach Durchführung der Instandsetzung 24 oder während der Durchführung der Instandsetzung 24 erfolgt im Rahmen eines Dokumentationsschrittes 16 und der Fertigstellung 314 der Instandsetzung 24 die Erstellung der Dokumentation. Dazu stehen ein erster Zugangspfad 316, ein zweiter Zugangspfad 318 sowie ein dritter Zugangspfad 320 zum Dokumentationssystem zur Verfügung. Im Falle des ersten Zugangspfads 316 hat der Mitarbeiter des beauftragten Unternehmens bereits Zugang, so dass eine Registrierung entfallen kann. Im Rahmen des zweiten Zugangspfades 318 ist der Auftragnehmer bereits registriert, die Freischaltung eines Auftrages 322 muss jedoch noch erfolgen; im Falle des dritten Zugangspfades 320 erfolgt ein erster Registrierungsschritt 322 zur Benutzerregistrierung sowie ein weiterer, diesem nachgeschalteter zweiter Registrierungsschritt 324 zur Freischaltung des Auftrages.

Nach der Auswahl des betreffenden Auftrages, der durch den Mitarbeiter des Auftragnehmers zu bearbeiten ist, sind zwei unterschiedliche Fälle von durchführungs- beziehungsweise schottrelevanten Datensätzen zu unterscheiden. Entweder verfügt eine Durchführung 62 beziehungsweise ein dort enthaltenes Schott bereits über eine in der Datenbank angelegte Kennzeichnungsnummer, zu welcher ein weiterer Datensatz hinzugefügt werden soll, oder - im anderen Falle - erfolgt eine Registrierung einer neuen eine neue Durchführung 10 kennzeichnenden Kennzeichnungsnummer im System, zu der der erste Datensatz erzeugt werden soll.

Die im Rahmen der Instandhaltung 24 an der Durchführung 62 vorgenommene Bilddokumentation 14 identifiziert aufgrund der Sichtbarkeit der Kennzeichnungsnummer auf einem der Enden des Kennzeichnungsträgers 66 die Durchführung 62 beziehungsweise das in dieser aufgenommene Schott.

Aus der Darstellung gemäß Figur 6.2 geht hervor, wie eine Einpflege von Durchführungsbeziehungsweise Schott-relevanten Daten erfolgt. Nach einem Einlogschritt 340 erfolgt eine Bestätigung 342. Im Rahmen einer Auftragsbearbeitung 344 schließt sich eine Auf tragsauswahl 346 an. Danach gibt der Mitarbeiter den generierten Freischaltcode 306, der ihm im Rahmen des Schrittes 310 übermittelt wurde (vergleiche Darstellung gemäß Figur 6.1), ein, was über eine auftragsbezogene Freischaltbestätigung 350 bestätigt wird. Im Rahmen einer Auftragsbearbeitung 352 erfolgt die Bearbeitung, so z. B. eine Erstellung von Datensätzen, so z. B. innerhalb der Cluster 110, 110ᵢ, 120, 120ᵢ, 150, 150ᵢ, 160, 160ᵢ, 170, 170ᵢ, 180, 180ᵢ und 190, 190ᵢ.

Nach der Auftragsbearbeitung gemäß Schritt 352 gemäß des Flussdiagramms in Figur 6.2 erfolgt der Dokumentationsschritt 16.

Nachdem dies abgeschlossen ist, erfolgt ein Prüfschritt 210, der durch den Auftraggeber durchgeführt wird. Nach dem Durchlaufen des Prüfschrittes 210 erfolgt entweder eine Bestätigung 354, der mindestens einen korrekt erstellten Datensatz 354 bestätigt, oder die Identifikation 356 eines fehlerhaften Datensatzes. Von der Fehlermeldung 356 wird zur Auftragsbearbeitung 352 zurückverzweigt, so dass der fehlerhafte Datensatz korrigiert werden kann.

Ist der Datensatz gemäß der Bestätigung 354 in Ordnung, so übermittelt der Auftraggeber gemäß Schritt 358 diesen an die Datenbankstruktur, so dass dieser innerhalb eines Aktualisierungsschrittes 359 aktualisiert werden kann.

Aus dem Flussdiagramm gemäß der Darstellung in Figur 6.2 ergibt sich, dass das Vorgehen bei der Erstellung von Cluster-relevanten Datensätzen zumindest einem Vier-Augen-Prinzip unterliegt, da die Erstellung der jeweiligen Datensätze durch den Auftragnehmer erfolgt und die Abnahme und endgültige Einpflege in die Datenbankstruktur 100 nur durch den Auftraggeber vorgenommen werden kann, vergleiche die Schritte 210 Prüfschritt sowie 358 Übermittlung.

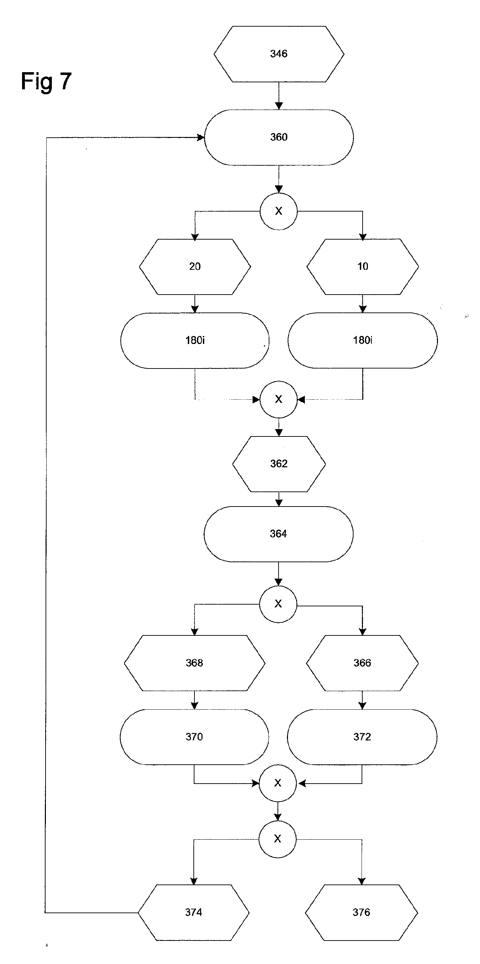

Der Darstellung gemäß Figur 7 ist ein Verfahren zur Erstellung von Datensätzen zu entnehmen. Nach Auftragsauswahl 346 erfolgt die Erstellung eines Datensatzes in Schritt 360, in welchem der Mitarbeiter des beauftragten Unternehmens einen relevanten Datensatz inklusive der Bilddokumentation 14 erstellt. Handelt es sich um eine bereits existierende Durchführung 20, werden die zugehörigen Raumnummern benachbarter Räume aus dem Datensatz 180ᵢ des Dokumentationssystems automatisch zugeordnet; handelt es sich um eine neue Durchführung 10, werden die Raumnummern der angrenzenden Räume im Rahmen des Datensatzes 180ᵢ manuell eingegeben. Nach Komplettierung 362 des Datensatzes erfolgt eine Bestätigung 364 für denjenigen, der den Datensatz abschließend erstellt hat.

Nach der Bestätigung 364 hinsichtlich der kompletten Erstellung des Datensatzes erfolgt bei Eingabe 366 des Aktivierungscodes eine Eingabe 366. Ist ein Aktivierungscode unnötig, vergleiche Position 368, kann ein Abgleich 370 der Raumnummern vorgenommen werden. Der Freischaltungscode, generiert gemäß Schritt 306, dient dazu, dem Auftragnehmer den jeweiligen Auftrag innerhalb der Datenbankstruktur 100 zur Bearbeitung 352 zugänglich zu machen. Der Aktivierungscode 366 wird benötigt, um eine neue Kennzeichnungsnummer mit dazugehörigem Datensatz in die Datenbankstruktur gemäß 16 oder 212 einpflegen zu können. Position 374 kennzeichnet eine Wiederholung des Prozesses für weitere Datensätze; Position 376 stellt dessen Abschluss dar.

Der Aktivierungscode 366 befindet sich auf dem Kennzeichnungsträger 66, wodurch sichergestellt ist, dass nur Original-Kennzeichnungsträger 66 verwendet werden können und keine Kennzeichnungsnummer doppelt in die Datenbankstruktur 100 gelangt.

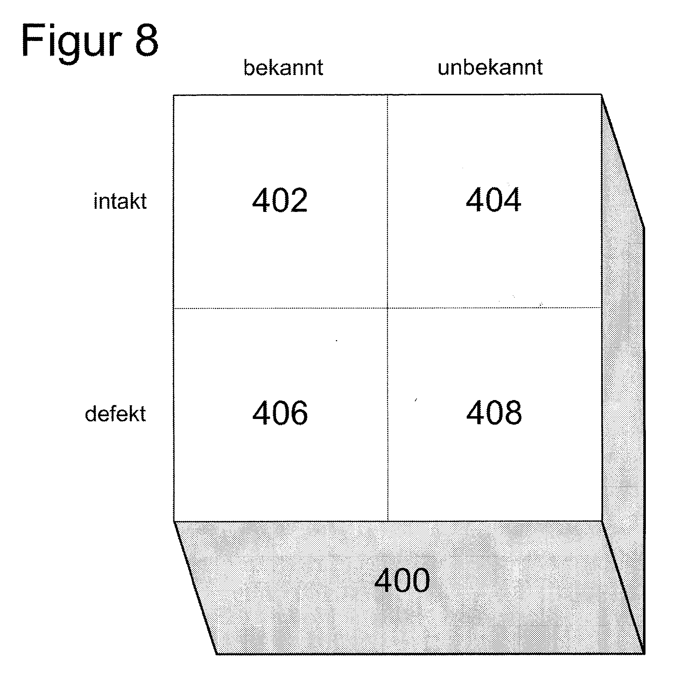

Figur 8 ist ein Mengendiagramm von vier Klassen von Abschottungen beziehungsweise Durchführungen zu entnehmen.

Aus der Darstellung gemäß Figur 8 geht hervor, dass die Menge aller Abschottungen beziehungsweise Durchführungen in einem Gebäude durch Bezugszeichen 400 gekennzeichnet ist. Die Menge 400 umfasst sowohl bekannte, intakte Schottungen beziehungsweise Durchführungen 402, unbekannte, intakte Schottungen beziehungsweise Durchführungen 404 sowie bekannte, defekte Schottungen beziehungsweise Durchführungen 406 sowie unbekannte, defekte Schottungen beziehungsweise Durchführungen 408.

Mit dem erfindungsgemäß vorgeschlagenen Verfahren wird der Anteil der intakten und bekannten Schottungen beziehungsweise Durchführungen 402 aus der Menge 400 aller Durchführungen beziehungsweise Schottungen erhöht, während die Menge der intakten, unbekannten Durchführungen beziehungsweise Schottungen 404, der defekten, jedoch bekannten Durchführungen beziehungsweise Schottungen 406 und vor allem der defekten und unbekannten Schottungen beziehungsweise Durchführungen 408 minimiert wird. Idealerweise umfasst die Menge 400 unter Einsatz des erfindungsgemäß vorgeschlagenen Verfahrens zur dauerhaften Identifizierung und Dokumentation von Kabel- beziehungsweise Rohrdurchführungen in Gebäuden nach einem Zeitraum der Anwendung des Verfahrens nur noch bekannte und intakte Schottungen beziehungsweise Durchführungen 402 beziehungsweise bekannte und defekte Schottungen angedeutet in Figur 8 durch Bezugszeichen 406.

### Bezugszeichenliste

| | | | |
|---|---|---|---|
| 10 | neue Durchführung | 110ᵢ | Datensatz Durchführung |
| 12 | Erstellung neue Durchführung | | |
| 14 | Bilddokumentation Durchführung | 120 | statusbezogene Daten Durchführung |
| 16 | Dokumentationsschritt | | |
| 18 | Einpflege in Dokumentationssys- | 120ᵢ | Datensatz Status |
| | tem | 130 | protokollbezogene Daten |
| 20 | intakte, bekannte Durchführung | 130ᵢ | Datensatz protokollbezogene Daten |
| 22 | Zerstörungsereignis | | |
| 24 | Instandsetzung | 140 | Protokolldaten |
| 26 | Dokumentationsverlust | 140ᵢ | Datensatz Protokoll |
| 28 | Entdeckung defekte und unbekannte Durchführung | 150 | unternehmensbezogene Daten |
| | | 150ᵢ | Datensatz Unternehmen |
| 30 | Zerstörung unbekannte Durchführung | 160 | Mitarbeiterdaten |
| | | 160ᵢ | Datensatz Mitarbeiter |
| | | 170 | Auftragsdaten |
| 40a, b, c | kontrollierter Prozess | 170ᵢ | Datensatz Auftrag |
| 50a, b | nicht kontrollierter Prozess | 180 | Schott-Daten |
| | | 180ᵢ | Schott identifizierende Daten |
| 60 | Gebäudeteil (Wand, Decke, Boden) | 190 | Bearbeitungszustand |
| | | 190i | Datensatz für Abschottung |
| 61 | Kennzeichnungsschild laut Zulassung | 200 | Zentrale |
| 62 | Durchführung | 202 | Lagerung Kennzeichnungsträger |
| 64 | Medienleitungen | 204 | Distribution Kennzeichnungsträger |
| 66 | Kennzeichnungsträger | | |
| 68 | Breite Kennzeichnungsträger | 206 | Verbau |
| 70 | erster Endbereich | 208 | Dokumentation |
| 72 | Vorderseite | 210 | Prüfschritt |
| 74 | Rückseite | 212 | Einstellung Datensatz in Datenbank |
| 76 | Einfaltung | | |
| 78 | zweiter Endbereich | | |
| 80 | Tiefe Durchführung | 300 | Beauftragung |
| | | 302 | Auftragseingabe |
| 100 | Datenbankstruktur | 304 | Bestätigung |
| 110 | Durchführungsbezogene Daten | 306 | Generierung Freischaltcode |
| 308 | Bestätigung | 376 | Abschluss des Prozesses |
| | | | |
| 310 | Übermittlung Freischaltcode an Auftragnehmer | 400 | Menge aller Schottungen beziehungsweise Durchführungen |
| 312 | Bestätigung | 402 | bekannte intakte Schottungen |
| 314 | Fertigstellung Instandsetzung | 404 | unbekannte intakte Schottungen |
| 316 | erster Zugangspfad zur Datenbank | 406 | bekannte defekte Schottungen |
| 318 | zweiter Zugangspfad zur Datenbank | 408 | unbekannte defekte Schottungen |
| 320 | dritter Zugangspfad zur Datenbank | | |
| 322 | erster Registrierungsschritt | | |
| 324 | zweiter Registrierungsschritt | | |
| | | | |
| 340 | Einlogschritt | | |
| 342 | Bestätigung | | |
| 344 | Auftragsbearbeitung (Option) | | |
| 346 | Auftragsauswahl | | |
| 348 | Eingabe Freischaltcode | | |
| 350 | Freischaltbestätigung (auftragsbezogen) | | |
| 352 | Auftragsbearbeitung | | |
| 354 | Bestätigung Fehlerfreiheit | | |
| 356 | Wiederholungsschritt | | |
| 358 | Übermittlung | | |
| 359 | Aktualisierung | | |
| 360 | Datensatzerstellung | | |
| 362 | Abschluss Datensatzerstellung | | |
| 364 | Bestätigung durch Mitarbeiter | | |
| 366 | Aktivierungscode | | |
| 368 | Aktivierungscode unnötig | | |
| 370 | Abgleich 180ᵢ | | |
| 372 | Eingabe 366 | | |
| 374 | Wiederholung des Prozesses für weitere Datensätze | | |

## Patentansprüche

1. Verfahren zur Identifizierung einer Durchführung (10, 62) mindestens einer Leitung (64) für ein Versorgungsmedium durch ein Gebäudeteil (60), insbesondere eine Wand oder eine Decke, mit nachfolgenden Verfahrensschritten:
a) der Vergabe einer Kennzeichnungsnummer und deren Aufbringen auf einem Kennzeichnungsträger (66), der einer Durchführung (10, 62) eindeutig zugeordnet ist,
b) der Codierung technischer Daten und/oder organisatorischer Daten auf dem Kennzeichnungsträger (66),
c) dem Verbau (206) des Kennzeichnungsträgers (66) in der Durchführung (60, 62) derart, dass mindestens ein Endbereich (70, 78) des Kennzeichnungsträgers (66) an der Durchführung (10, 62) sichtbar ist,
d) der Einpflege (18) mindestens eines mindestens die Kennzeichnungsnummer enthaltenden, aktualisierbaren Datensatzes (110ᵢ, 120ᵢ, 130ᵢ, 140ᵢ, 150ᵢ, 160ᵢ, 170ᵢ, 180ᵢ, 190ᵢ) in ein Dokumentationssystem (100).

2. Verfahren gemäß Anspruch 1, **dadurch gekennzeichnet, dass** die gemäß Verfahrensschritt a) vergebene Kennzeichnungsnummer eine zentral (200) nur einmal vergebene Nummer oder eine zentral (200) zugeteilte fortlaufende Nummer ist.

3. Verfahren gemäß Anspruch 1, **dadurch gekennzeichnet, dass** die Kennzeichnungsnummer gemäß Verfahrensschritt a) bei der Herstellung des Kennzeichnungsträgers (66) dauerhaft, bevorzugt maschinenlesbar, auf diesem aufgebracht wird.

4. Verfahren gemäß Anspruch 1, **dadurch gekennzeichnet, dass** der Kennzeichnungsträger (66) aus einem temperaturbeständigen, feuchtigkeitsbeständigen Material, insbesondere einem Polyethylen, einem Polypropylen, oder aus einem Verbundteil, eine Kunststofffolie und einen Edelstahl umfassend, hergestellt wird.

5. Verfahren gemäß Anspruch 1, **dadurch gekennzeichnet, dass** der Kennzeichnungsträger (66) gemäß Verfahrensschritt c) bei Erstellung einer neuen Durchführung (10) im Gebäudeteil (60) oder bei Instandsetzung (24) einer defekten oder zerstörten Durchführung (62, 28) in das Gebäudeteil (60) eingelassen wird.

6. Verfahren gemäß Anspruch 5, **dadurch gekennzeichnet, dass** der Kennzeichnungsträger (66) derart in der Durchführung (62, 10) verbaut wird, dass mindestens einer von dessen Endbereichen (70, 78), bevorzugt beide Endbereiche (70, 78) in an die Durchführung (10, 62) angrenzenden Räumen sichtbar und beide Seiten (72, 74) jeweils eindeutig **gekennzeichnet** sind.

7. Verfahren gemäß Anspruch 6, **dadurch gekennzeichnet, dass** die Endbereiche (70, 78) mit der jeweiligen Kennzeichnungsnummer im Rahmen einer der Durchführung (62, 10) individuell zugeordneten Bilddokumentation (14) erfasst werden.

8. Verfahren gemäß Anspruch 1, **dadurch gekennzeichnet, dass** das Dokumentationssystem (100) eine Datenbankstruktur umfasst, die mindestens ein Cluster (110) für auf die Durchführung (10, 62) bezogene Daten (110ᵢ), mindestens ein Cluster (120) für auf einen Status eines Schotts bezogene Daten (120ᵢ), mindestens ein Cluster (130) für auf ein Protokoll bezogene Daten (130ᵢ), mindestens ein Cluster (140) für auf ein Protokoll bezogene Daten (140ᵢ), mindestens ein Cluster (150) für mit der Erstellung einer neuen Durchführung (10) beauftragte Unternehmen oder mit einer Instandsetzung (24) für eine Durchführung (10, 62) relevanten Daten (150ᵢ), mindestens ein Cluster (160) für mitarbeiterbezogene Daten (160ᵢ), mindestens ein Cluster (170) für auftragsbezogene Daten (170ᵢ) sowie mindestens ein Cluster (180) für auf ein Brandschott bezogene, dieses identifizierende Daten (180ᵢ) aufweist.

9. Verfahren gemäß Anspruch 8, **dadurch gekennzeichnet, dass** das mindestens eine Cluster (110) für auf die Durchführung (10, 62) bezogene Daten (110i) und/oder das mindestens eine Cluster (180) für auf ein Schott bezogene Daten (180i) Daten betreffend eine Kennzeichnungsnummer, an die Durchführung (10, 62) angrenzende Räume, eine Bilddokumentation (14) vor und nach der Erstellung einer neuen Durchführung (10, 62) oder eines neuen Schotts oder nach der Instandsetzung (24) eines defekten Schotts (28) sowie über den Status der Durchführung (10, 62) und/oder des Schotts nach dem Verbau (206) umfasst.

10. Verfahren gemäß Anspruch 8, **dadurch gekennzeichnet, dass** einem mit der Erstellung einer oder mehrerer neuer Durchführungen (10), mit der Instandsetzung (24) einer oder mehrerer defekter Schotts oder Durchführungen (62) beauftragten Unternehmen ein Freischaltcode (310) übermittelt wird, durch den nur der Zugriff berechtigter Personen auf den jeweiligen Auftrag sichergestellt ist.

11. Verfahren gemäß Anspruch 8, **dadurch gekennzeichnet, dass** die auf den Kennzeichnungsträger (66) aufgebrachten Kennzeichnungsnummern nur mit einem zugehörigen Aktivierungscode (366) in die Datenbankstruktur (100) eingestellt (212) werden können.

12. Verfahren gemäß Anspruch 9, **dadurch gekennzeichnet, dass** nach Erstellung der Datensätze (110, 180) diese nach einem Prüfschritt (210) durch einen Auftraggeber in das Dokumentationssystem (100) eingepflegt (18) werden.

13. Verfahren gemäß der Ansprüche 8 bis 12, **dadurch gekennzeichnet, dass** nur der Auf tragnehmer Datensätze (110, 180) erstellen kann und der Auftragnehmer Cluster (110, 180) nicht ohne Kenntnis und Prüfschritt (210) durch den Auftraggeber in das Dokumentationssystem (100) einstellen kann.

14. Verfahren gemäß Anspruch 8, **dadurch gekennzeichnet, dass** im Rahmen einer Einpflege (18) mindestens ein Cluster (130) für prüfprotokollbezogene Daten (130ᵢ) oder mindestens ein Cluster (140) für Protokolldaten (140ᵢ) eingepflegt (18) werden.

15. Kennzeichnungsträger (66) mit einer einmalig, zentral (200) vergebenen Kennzeichnungsnummer zum Verbau (206) in einem Gebäudeteil (60), **dadurch gekennzeichnet, dass** dieser streifenförmig ausgebildet ist und seine Länge eine Tiefe (80) einer Durchführung (10, 62) in dem Gebäudeteil (60) übersteigt und im verbauten Zustand (206) mindestens einer der Endbereiche (70, 78) des Kennzeichnungsträgers (66) sichtbar ist.

16. Kennzeichnungsträger (66) gemäß dem vorhergehenden Anspruch, **dadurch gekennzeichnet, dass** dieser verschiedene, auf eine Tiefe (80) der Durchführung (62) angepasste Längen aufweist.

17. Kennzeichnungsträger (66) gemäß Anspruch 15, **dadurch gekennzeichnet, dass** dieser aus Polyethylen oder Polypropylen gefertigt ist.

18. Kennzeichnungsträger (66) gemäß Anspruch 15, **dadurch gekennzeichnet, dass** dieser aus einem Verbundwerkstoff, mindestens eine Kunststofffolie und mindestens ein Edelstahlmaterial umfassend, hergestellt ist.

19. Kennzeichnungsträger (66) gemäß Anspruch 15, **dadurch gekennzeichnet, dass** der Kennzeichnungsträger (66) einen abtrennbaren oder abziehbaren Aktivierungscode (366) zur Einpflege (212) der Kennzeichnungsnummer in die Datenbankstruktur (100) enthält.
